# EUROPÄISCHE PATENTANMELDUNG

(11) **EP 0 785 488 A1**
(43) Veröffentlichungstag der Anmeldung: **23.07.1997**
(21) Anmeldenummer: 96100729.1
(22) Anmeldetag: 19.01.1996
(51) Int. Cl.: G05B 11/18, G05D 23/19

(54) **Regelkreis für Zweipunktregelung**

(71) Anmelder: Staefa Control System AG, 8712 Stäfa (CH)
(72) Erfinder: Gübeli, Markus, CH-8708 Männedorf (CH)
(74) Vertreter: Dittrich, Horst, Dr.

(57) **Zusammenfassung**

Der Regelkreis enthält einen Regler (1), eine diesem nachgeschaltete Steuerstufe (2) und einen Lufterhitzer (3) mit Schaltstufen für verschiedene Lasten, wobei die Schaltstufen durch von der Steuerstufe (2) angesteuerte Schaltmittel schaltbar sind. Der Regler (1), der anhand eines Eingangssignals (Tᵢ) ein Regelsignal (Sᵣ) erzeugt, ist durch einen PI(D)-Regler gebildet. Das Regelsignal (Sᵣ) wird in eine Anzahl von Bändern aufgeteilt, und die Steuerstufe (2) schaltet bei Über- oder Unterschreiten des jeweiligen Bandes durch das Regelsignal (Sᵣ) die zur Befriedigung des aktuellen Bedarfs kleinstmögliche Schaltstufe.

## Beschreibung

Die Erfindung betrifft einen Regelkreis für Zweipunktregelung, mit einem Regler, dem ein Eingangssignal zugeführt ist und der anhand dieses Eingangssignals ein Regelsignal erzeugt, mit einer dem Regler nachgeschalteten Steuerstufe, und mit Schaltstufen, die durch von der Steuerstufe angesteuerte Schaltmittel schaltbar sind.

Bei bekannten Regelkreisen dieser Art, wie beispielsweise bei dem in der CH-Patentschrift Nr. 545 509 beschriebenen Stufenregler, ist der Regler ein sogenannter P-Regler, also ein reiner Proportionalregler, und die einzelnen Schaltstufen sind relativ gross. Der Proportionalregler hat zur Folge, dass immer eine gewisse Abweichung vom Sollwert vorhanden ist und nicht unterschritten werden kann, und die Schaltstufen begrenzen die Auflösung. Wenn man, was ebenfalls bekannt ist, die Anzahl der Schaltstufen erhöht und damit eine feinere Abstufung und eine bessere Auflösung erzielt, dann steigt die Anzahl der erforderlichen Schaltvorgänge stark an.

Durch die Erfindung soll nun ein Regelkreis der eingangs genannten Art angegeben werden, der eine möglichst geringe Sollwertabweichung aufweist und ausserdem möglichst wenige Schaltvorgange durchführen muss.

Diese Aufgabe wird erfindungsgemäss dadurch gelöst, dass der Regler durch einen PI-Regler gebildet ist, dass eine Aufteilung des Regelsignals in eine Anzahl von Bändern erfolgt, und dass die Steuerstufe bei Über- oder Unterschreiten des jeweiligen Bandes durch das Regelsignal die zur Befriedigung des aktuellen Bedarfs kleinstmögliche Schaltstufe schaltet.

Der PI-Regler mit dem zusätzlichen Integralanteil hat den Vorteil, dass die Sollwertabweichung praktisch Null wird, und die erfindungsgemässe Arbeitsweise der Steuerstufe, also die Aufteilung des Regelsignals oder Bedarfssignals in Bänder und das Schalten der kleinstmöglichen Schaltstufe bei Verlassen eines Bandes, ermöglicht eine Begrenzung der Anzahl der Bänder, und das hat wiederum eine Minimierung der Anzahl der Schaltungen zur Folge.

Ein erstes bevorzugtes Ausführungsbeispiel des erfindungsgemässen Regelkreises ist dadurch gekennzeichnet, dass mehrere Schaltstufen mit unterschiedlichen Lasten vorgesehen sind, und dass beim Schalten einer Schaltstufe einer bestimmten Grösse die nächstkleinere Stufe mitgeschaltet wird.

Ein zweites bevorzugtes Ausfühungsbeispiel ist dadurch gekennzeichnet, dass die genannten Schaltstufen durch mechanische Relais ein- und ausschaltbar sind, und dass eine stetig regelbare Schaltstufe vorgesehen ist, deren Last mindestens gleich wie die kleinste Last der anderen Schaltstufen ist.

Ein drittes bevorzugtes Ausführungsbeispiel ist dadurch gekennzeichnet, dass die stetig regelbare Schaltstufe durch eine elektrische Leistungsstufe oder einen Halbleiterschalter gebildet ist.

Bei einem vierten bevorzugten Ausführungsbeispiel erfolgt das gleichzeitige Schalten der nächstkleineren Stufe beim Schalten einer Schaltstufe einer bestimmten Grösse nur bei den beiden grössten Schaltstufen.

Die stetig regelbare Schaltstufe ermöglicht eine Regelung innerhalb des jeweiligen Bandes und damit eine Erhöhung der Regelgenauigkeit. Die Schaltregeln der Steuerstufe haben zur Folge, dass eine Schaltstufe umso weniger geschaltet wird, je grösser sie ist, was sich auf die Stabilität des Stromversorgungsnetzes positiv auswirkt.

Im folgenden wird die Erfindung anhand eines Ausführungsbeispiels und der Zeichnungen näher erläutert; es zeigt:
- Fig. 1: ein Blockschema eines erfindungsgemässen Regelkreises für Zweipunktregelung,
- Fig. 2: ein die Schaltzustände der einzelnen Schaltstufen darstellendes Diagramm; und
- Fig. 3: ein Diagramm des zeitlichen Verlaufs des Eingangssignals der Steuerstufe und der entsprechenden Schaltzustände.

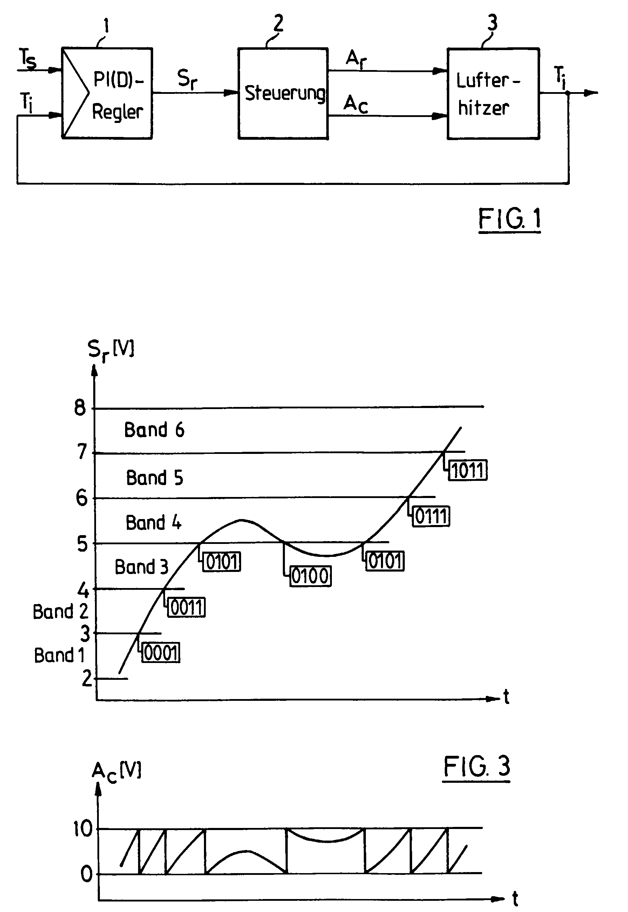

Der in Fig. 1 dargestellte Regelkreis, der zur Temperaturregelung von Zuluft verwendet wird, besteht darstellungsgemäss aus einem PI(D)-Regler 1, d.h. einem Proportionalregler mit einem Integralanteil und einem optionalen Differentialanteil, einer Steuerstufe 2 und einem elektrischen Lufterhitzer 3. Der PI(D)-Regler 1 hat zwei Eingänge, wobei an dem einen der Sollwert Tₛ der Temperatur der Zuluft und an dem anderen der am Ausgang des Lufterhitzers 3 erhältliche Istwert Tᵢ dieser Temperatur liegt. Die Aufgabe des Regelkreises besteht darin, die Differenz zwischen diesen beiden Temperaturwerten möglichst auf Null auszuregeln. Der optionale Differentialanteil des PI(D)-Reglers 1 dient zur Vermeidung von eventuellem Überschwingen bei grossen Änderungen des Temperatursollwerts Tₛ und bringt somit dynamische Verbesserungen.

Der PI(D)-Regler 1 erzeugt ein die genannte Temperaturdifferenz repräsentierendes Regelsignal Sᵣ, welches dem Bedarfssignal entspricht und der Steuerstufe 2 zugeführt wird. Das Regel- oder Bedarfssignal Sᵣ liegt als Spannung vor und beträgt vorzugsweise 2 bis 10 Volt. Der elektrische Lufterhitzer 3 enthält eine Anzahl verschiedener Schaltstufen, das sind Lasten, sowie diesen zugeordnete Schaltmittel, die von der Steuerstufe 2 angesteuert sind. Es sind mehrere, beispielsweise vier, mechanische, durch mechanische Relais ein- und ausschaltbare Schaltstufen und eine stetig regelbare Schaltstufe vorgesehen, wobei die letztere durch eine elektrische Leistungsstufe oder durch einen Halbleiterschalter SSR (= solid state relais) gebildet ist. Die stetig regelbare Stufe, die eine kleine Schaltstufe bildet, erhöht die Regelgenauigkeit, ist aber nicht unbedingt erforderlich.

Die Steuerstufe 2 weist Relais-Ausgänge Aᵣ zur Schaltung der mechanischen Relais und einen stetigen oder PDM-Ausgang (PDM = Pulsdauermodulatin) A_{c} für die stetig regelbare Schaltstufe auf. Die mechanischen Schaltstufen sind so dimensioniert, dass die Last möglichst genau nach dem Binärsystem auf die Stufen verteilt wird. Das bedeutet eine Verdoppelung der Heizleistung bei jeder Schaltstufe. In der Praxis wird diese Verteilung nur in den seltensten Fällen erreicht, weil durch die Anzahl der Heizstäbe und durch das Bedürfnis, grosse Lasten gleichmässig auf die drei Stromphasen aufzuteilen, gewisse Einschränkungen bestehen.

Wenn beispielsweise vier mechanische Schaltstufen vorgesehen und zur Erbringung der erforderlichen Heizleistung 36 Heizstäbe nötig sind, dann kann eine typische Verteilung der Heizstäbe auf die vier Schaltstufen so aussehen:
Stufe 1: 3 Heizstäbe
Stufe 2: 6 Heizstäbe
Stufe 3: 9 Heizstäbe
Stufe 4: 12 Heizstäbe
stetig regelbare Stufe: 6 Heizstäbe.

Man wählt also die stetig regelbare Stufe minim grösser als die kleinste mechanisch geschaltete Stufe.

Die Steuerstufe 2 unterteilt das Bedarfssignal Sᵣ in eine Anzahl von Bändern einer bestimmten Bandbreite. Die folgende Tabelle 1 gibt eine Übersicht, wieviele Bänder für eine bestimmte Anzahl von mechanischen Schaltstufen erforderlich sind und wie gross deren Bandbreite ist. Ausserdem sind die bei der jeweiligen Anzahl von mechanischen Schaltstufen jeweils angewandten Schaltregeln der Steuerstufe 2 angegeben.

In der Tabelle ist die Schaltstufe 1 die kleinste mechanische Stufe; die Anzahl 0 mechanische Stufen in der ersten Zeile der Tabelle bezeichnet den bloss theoretischen Fall, dass nur das Band für die stetig regelbare Schaltstufe vorgesehen ist. Der stetige Ausgang A_{c} wird innerhalb des aktuellen Bandes zwischen 0 und 10 Volt ausgesteuert. Bei den in der rechten Spalte der Tabelle angegebenen Schaltregeln besagt beispielsweise die in Zeile 5 angegebene Regel "i, i-1 if i > 2" folgendes: Falls die mechanische Schaltstufe i geschaltet wird, dann wird ebenfalls die nächstkleinere Stufe i-1 geschaltet, sofern i grösser als zwei ist.

**Tabelle 1**

| Anzahl mechanischer Stufen | Anzahl Bänder | Bandbreite [V] | Schaltregel |
|---|---|---|---|
| 0 | 1 | 8 | - |
| 1 | 2 | 4 | i |
| 2 | 4 | 2 | i, i-1 |
| 3 | 7 | 1.14 | i, i-1 if i > 1 |
| 4 | 8 | 1 | i, i-1 if i > 2 |
| 6 | 10 | 0.8 | i, i-1 if i > 4 |

Die Steuerstufe 2 wendet also die folgenden Regeln an:
1. Das Bedarfssignal Sᵣ wird in eine Anzahl Bänder unterteilt.
2. Wenn das Bedarfssignal Sᵣ das jeweilige Band über- oder unterschreitet, dann wird versucht, den Bedarf mit der kleinstmöglichen Schaltstufe (= Last) zu befriedigen.
3. Beim Schalten einer Stufe einer bestimmten Grösse wird gleichzeitig die nächstkleinere Stufe geschaltet. Wegen Regel 2 wird die kleinere Stufe eingeschaltet, wenn die grössere ausgeschaltet wird, und sie wird ausgeschaltet, wenn die grössere Stufe eingeschaltet wird (diese Regel gilt nur für die zwei grössten Schaltstufen).
4. Wenn zusätzlich zu den Relaisausgängen Aᵣ ein stetiger Ausgang vorhanden ist dann wird dieser innerhalb des gerade aktuellen Bandes proportional von 0 bis 10 Volt ausgesteuert.

Diese Schaltregeln führen dazu, dass die Anzahl der Bänder begrenzt ist und wesentlich weniger Schaltungen vorgenommen werden müssen als bei einem konventionellen Regler, der solche Schaltregeln nicht anwenden kann. Die geringe Anzahl von Schaltungen ist insbesondere für grosse Lasten vorteilhaft, weil deren Ein- und Ausschalten das Stromnetz stören kann. Die Anzahl der Bänder ist deswegen begrenzt, weil diese Anzahl nicht binär wächst, obwohl sich sämtliche binären Schaltzustände dynamisch einstellen können, und die wesentliche Reduktion Schaltungen ist durch die stetig regelbare Schaltstufe bedingt.

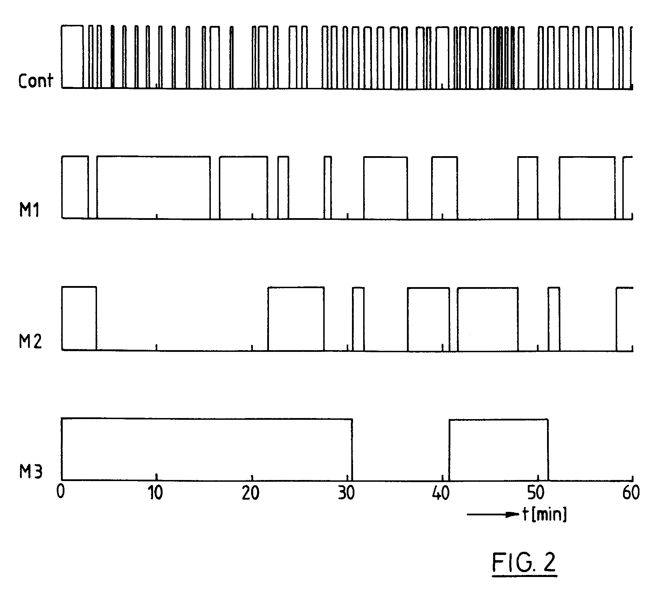

Figur 2 zeigt in einem Diagramm die Schaltzustände der einzelnen Stufen eines Lufterhitzers mit drei mechanisch geschalteten Stufen M 1 bis M 3 und mit einer stetig geregelten Stufe Cont. Die letztere ist im PDM-Modus gesteuert, wobei die minimale Periodendauer 40 Sekunden beträgt. Man kann dem Diagramm entnehmen, dass die stetige Stufe Cont dauernd schaltet und dass die Schaltfrequenz der mechanischen Stufen indirekt proportional zu deren Grösse ist. So schaltet darstellungsgemäss die grösste Stufe M 3, die eine Leistung von 7.5 kW aufweist, im dargestellten Zeitraum von 1 Stunde nur zweimal ein und aus, wogegen die etwa halb so grosse Stufe M 1 im gleichen Zeitraum etwa zehnmal ein- und ausschaltet.

Fig. 3 zeigt im oberen Teil den zeitlichen Verlauf des Bedarfssignals Sᵣ und die entsprechenden Schaltzustände für einen Lufterhitzer mit vier mechanisch und einer kontinuierlich geschalteten Stufe und im unteren Teil den zeitlichen Verlauf des kontinuierlichen Signals A_{c}. Das Bedarfssignal Sᵣ ist in Übereinstimmung mit Tabelle 1, Zeile 5, in 8 Bänder unterteilt, deren Bandbreite 1 Volt beträgt. Ab Schaltstufe 3 gilt neben den Rgeln 1, 2 und 4 auch Regel 3. Beim Schalten der Stufen 3 oder 4 wird also gleichzeitig auch Stufe 2 bzw. 3 geschaltet. Die neuen Schaltzustände sind in Kästchen eingetragen (0 bedeutet aus- und 1 eingeschaltet), wobei die kleinste Stufe jeweils rechts steht.

Wenn das Bedarfssignal Sᵣ von Band 1 in Band 2 wechselt, wird die Stufe 1 eingeschaltet und beim Wechsel von Band 2 in Band 3 zusätzlich die Stufe 2, die bei schon eingeschalteter Stufe 1 die kleinstmögliche einschaltbare Stufe ist. Beim Wechsel von Band 3 in Band 4 wird nach Regel 2 die Stufe 3 ein- und gleichzeitig nach Regel 3 die Stufe 2 ausgeschaltet. Wenn das Bedarfssignal Sᵣ kleiner wird und von Band 4 in Band 3 wechselt, wird nach Regel 2 Stufe 1 ausgeschaltet und beim neuerlichen Wechsel von Band 3 nach Band 4 wieder eingeschaltet. Beim Wechsel des Bedarfssignals Sᵣ von Band 4 nach Band 5 wird nach Regel 2 Stufe 2 eingeschaltet und beim Wechsel von Band 5 nach Band 6 wird nach Regel 2 Stufe 1 ein- und gleichzeitig nach Regel 3 Stufe ausgeschaltet.

Die folgende Tabelle 2 zeigt die Schaltzustände bei monoton ansteigendem bzw. fallendem Bedarfssignal Sᵣ:

**Tabelle 2**

| Bandübergang | Sᵣ 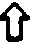 | Sᵣ 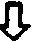 |
|---|---|---|
| 0↔1 | 0000 | 0000 |
| 1↔2 | 0001 | 0010 |
| 2↔3 | 0011 | 0100 |
| 3↔4 | 0101 | 1000 |
| 4↔5 | 0111 | 1010 |
| 5↔6 | 1011 | 1100 |
| 6↔7 | 1101 | 1110 |
| 7↔8 | 1111 | 1111 |

Wenn die Bandübergänge nicht monoton ansteigend oder fallend verlaufen, dann können sämtliche binären Zustände angenommen werden.

## Patentansprüche

1. Regelkreis für Zweipunktregelung, mit einem Regler (1), dem ein Eingangssignal (Tᵢ) zugeführt ist und der anhand dieses Eingangssignals ein Regelsignal (Sᵣ) erzeugt, mit einer dem Regler nachgeschalteten Steuerstufe (2) und mit Schaltstufen, die durch von der Steuerstufe angesteuerte Schaltmittel schaltbar sind, dadurch gekennzeichnet, dass der Regler (1) durch einen PI-Regler gebildet ist, dass eine Aufteilung des Regelsignals (Sᵣ) in eine Anzahl von Bändern erfolgt, und dass die Steuerstufe (2) bei Über- oder Unterschreiten des jeweiligen Bandes durch das Regelsignal die zur Befriedigung des aktuellen Bedarfs kleinstmögliche Schaltstufe schaltet.

2. Regelkreis nach Anspruch 1, dadurch gekennzeichnet, dass mehrere Schaltstufen (M 1 bis M 3) mit unterschiedlichen Lasten vorgesehen sind, und dass beim Schalten einer Schaltstufe einer bestimmten Grösse die nächstkleinere Stufe mitgeschaltet wird.

3. Regelkreis nach Anspruch 2, dadurch gekennzeichnet, dass die genannten Schaltstufen (M 1 bis M 3) durch mechanische Relais ein- und ausschaltbar sind, und dass eine stetig regelbare Schaltstufe (Cont) vorgesehen ist, deren Last mindestens gleich wie die kleinste Last der anderen Schaltstufen ist.

4. Regelkreis nach Anspruch 3, dadurch gekennzeichnet, dass die stetig regelbare Schaltstufe (Cont) durch eine elektrische Leistungsstufe oder einen Halbleiterschalter gebildet ist.

5. Regelkreis nach Anspruch 4, dadurch gekennzeichnet, dass das gleichzeitige Schalten der nächstkleineren Stufe beim Schalten einer Schaltstufe einer bestimmten Grösse nur bei den beiden grössten Schaltstufen erfolgt.

6. Regelkreis nach einem der Ansprüche 1 bis 5, dadurch gekennzeichnet, dass zwei bis sechs Schaltstufen vorgesehen sind und sich dadurch vier bis zehn Bänder ergeben.

7. Regelkreis nach Anspruch 3, dadurch gekennzeichnet, dass die durch mechanische Relais ein- und ausschaltbaren Schaltstufen (M 1 bis M 3) so dimensioniert sind, dass die Last möglichst genau nach dem Binärsystem auf diese Stufen verteilt wird.

8. Regelkreis nach einem der Ansprüch 1 bis 7, dadurch gekennzeichnet, dass der PI-Regler (1) einen optionalen Differentialanteil aufweist.
